Europäisches Patentamt

European Patent Office

Office européen des brevets

(19)

(11) Publication number: **0 328 296**
**A1**

(12) **EUROPEAN PATENT APPLICATION**

(21) Application number: 89300981.1

(51) Int. Cl.⁴: **B 65 G 47/28**

(22) Date of filing: 01.02.89

(30) Priority: 10.02.88 US 154664

(43) Date of publication of application:
16.08.89 Bulletin 89/33

(84) Designated Contracting States: DE FR GB IT

(71) Applicant: EMHART INDUSTRIES, INC.
426 Colt Highway
Farmington Connecticut 06032 (US)

(72) Inventor: Shay, Timothy W.
476 Breesport Road
Horseheads New York 14845 (US)

Giometti, Stephen M.
464 Wygant Road
Horseheads New York 14845 (US)

(74) Representative: Randall, John Walter et al
Emhart Patents Department Lyn House 39 The Parade
Oadby, Leicester LE2 5BB (GB)

(54) Translating station for linear indexing inspection machine.

(57) An improved handling system for a container inspection machine, and translating station therefore. The handling system is designed to change the conveying speed of articles as they pass through a plurality of inspection stations. A barrel cam with an appropriately configured cam track controls the displacement of a plurality of carriages (30) each of which guides a single container (20) through the system. The cam track includes a translating station at which the container (20) is simultaneously rotated and translated while the trolley moves at a constant (non-zero) velocity defined by a segment of the cam lobe. At this station, the container (20) may be urged against rotatable wheels (31, 33) on a carriage (30) by a guide rail (42), or may be frictionally rolled along one or more sensor strips (80) opposite the carriage. In a multi-functional inspection machine, this translating station may be combined with one or more stations at which the container dwells due to a zero pitch segment of the cam lobe.

**FIG. 4**

EP 0 328 296 A1

Description

## TRANSLATING STATION FOR LINEAR INDEXING INSPECTION MACHINE

Background of the Invention

The present invention relates to apparatus for handling glass containers and other articles during inspection, and more particularly to a design of an improved inspection machine accommodating both dwell stations and translating stations.

U.K. patent specification 1552994 to H. Bogatski discloses a system for handling glass containers and like articles while various operations may be carried out on such articles, wherein the articles are transported through multiple processing "stations" (e.g., for container inspection) at a changeable speed. The apparatus includes a plurality of trolleys, each being engageable with an article and moveable along a linear transport path. The trolleys are driven by a feed screw (barrel cam), such feed screw having different pitches at different axial positions to vary the speed of the trolleys.

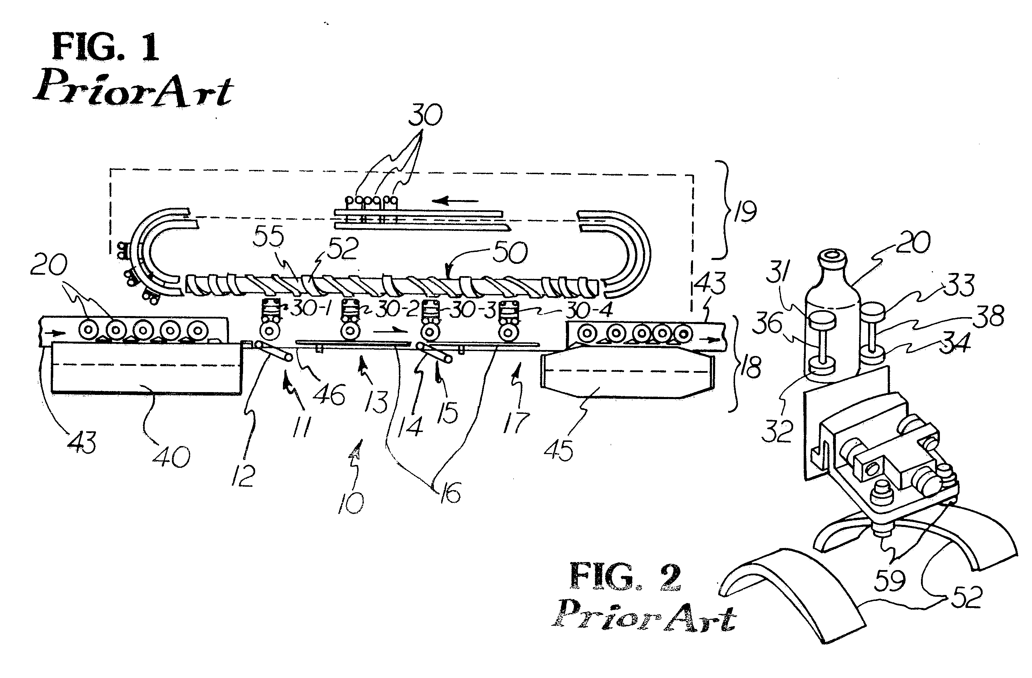

In applicants' commercial AIDA system based upon the Bogatski invention, somewhat schematically shown at 10 in the prior art view of Figure 1 hereto, inspections were carried out at four "stations" 11, 13, 15, and 17 at which the containers stopped due to zero pitch (dwell) sections of the barrel cam 50. The barrel cam 50 was driven and configured such that the speed of a trolley 30 matched the speed of conveyor 43 from which the bottles were transferred into the machine (onto support plate 46) by infeed device 40. The barrel cam 50 employed a sinus-shaped pattern of clefts 55 and lobes 52. (Note: the pattern of the cam 50 of Figure 1 is not meant to illustrate an actual configuration, merely to suggest a variable pitch of the cam lobes 52.) The carriages 30 were accelerated on leaving the infeed unit 40 and inspection stations 11, 13, 15 and 17, and decelerated when entering the inspection stations and an outfeed unit 45, and held in place while in any of the inspection stations 11, 13, 15 or 17. In a dwell or zero pitch section of the barrel cam 30, a container 20 may have been rotated in place (by contact with a spinning belt, see belts 12, 14 at stations 11, 15) or maintained stationary by a counter rail; in the AIDA system, two stations of each type were provided.

In the system described above, the carriages were conveyed around an oval track having straight sides and curved ends, including the transport side 18 at which the trolleys guided containers through inspection stations, and a return side 19 at which trolleys 30 returned to the container infeed area. The infeed device 40 might comprise the apparatus of U.S. patent No. 4,227,606.

As shown in Figure 2, a transport carriage consisted basically of a pair of upright rods 36 and 38, fitted with four freely rotating wheels 31-34. The vertical spacing between the wheels and horizontal spacing between the rods could be adapted to suit a specified range of container sizes and shapes. Carriage 30 included cam followers 59 which rode on the cam lobe 52.

The present invention provides an improved version of the transport system of U.K. patent No. 1552994. The inspection machine of U.K. Patent application 1552994 has an excellent design, but it encountered certain limitations in some inspection applications due to the fact that articles were indexed from station to station where they dwelled. In applications such as thinwall detection using a capacitive probe, in order to inspect the complete circumference of a container at a station, the container must be rotated relative to a capacitive sensor placed at one or more vertical locations on the conveyor. In one prior art capacitive thinwall detection approach, one or more capacitive sensor strips are provided, and the container is frictionally rotated against these strips. In order to ensure complete circumferential inspection of the container, this sensor must be longer than the circumference of the largest diameter container to be measured. Furthermore, it is necessary to provide a container-handling configuration which provides that only one container at a time will contact the capacitive sensor. Neither requirement is satisfied by the prior art design of U.K. Patent No. 1552994, and of the AIDA system embodying that patented invention.

Accordingly, it is a principal object of the invention to provide improved container handling apparatus well suited to a multi-functional inspection machine. A related object is to provide improved handling apparatus generally of the type disclosed in U.K. Patent No. 1552994, which will accommodate a capacitive thinwall inspection station in which the container rotates against an extended sensor, or other type of inspection device requiring translation of the container during inspection.

## Summary of the Invention

In satisfying the above and additional objects, the invention provides an improved apparatus for handling articles (such as round containers) during inspection of the type including an underlying support for articles traveling through an inspection area, a slidably mounted carriage for engaging an article on the support and guiding it through the inspection area, and a barrel cam with its axis parallel to the path of the carriage and including a cam lobe having different pitches at different axial positions, the carriage being linked to the cam lobe so that the carriage velocity is determined by the pitch of the cam lobe. The improvement comprises a translating station at which the cam lobe has a non-zero pitch causing transport of the carriage and article through the translating station, and means for engaging the article in cooperation with the carriage at said translating station to cause the article to rotate during the transport therethrough. In a preferred embodiment of the invention, that axial portion of the cam lobe which corresponds to the translating station has a constant pitch, thereby causing linear transport of the article through the translating station. Most preferably, the axial length of such axial cam portion, and the width of the translating station, are greater than the circumference of the article thereby permitting complete circumferential inspection of the article at the translating station.

In accordance with one aspect of the invention, the engaging means may comprise a guide rail which urges the article against the carriage, causing the article to rotate between the guide rail and the carriage. Alternatively, the engaging means may comprise at least one sensor strip which frictionally engages the article so that it rolls against the sensor strip for inspection by means associated with that sensor strip. In a particular embodiment of such alternative engaging means, the sensor strip comprises an element of a capacitive thinwall detector.

In accordance with another aspect of the invention, the improved handling apparatus may combine a translating station with one or more dwell stations as known in the prior art, in a multi-station inspection machine. At said dwell station or stations, the cam has a zero pitch segment so that the article will not translate for a certain period. The article may be held stationary at such dwell station, or may be rotated in place.

In a preferred embodiment of the invention, as known in the prior art, the carriage includes a plurality of bearing wheels for rotatably engaging one side of the container.

Brief Description of the Drawings

In illustrating the above and additional aspects of the invention, the detailed description of the preferred embodiment which follows should be taken together with the drawings in which:

Figure 1 is a plan view of a prior art handling system for a multi-station inspection machine in accordance with U.K. patent No. 1552994;

Figure 2 is a prior art perspective view of an illustrative transport carriage for the system of Figure 1;

Figure 3 is a plan view of the cam track pattern of a cam for an improved version of the apparatus of Figure 1, in accordance with a preferred embodiment of the invention, incorporating a translating station in addition to four dwell stations;

Figure 4 is a simplified top view of a translating station in accordance with a first embodiment of the invention;

Figure 5 is a side view of the translating station of Figure 4; and

Figure 6 is a top view of a translating station in accordance with a second embodiment of the invention.

Detailed Description

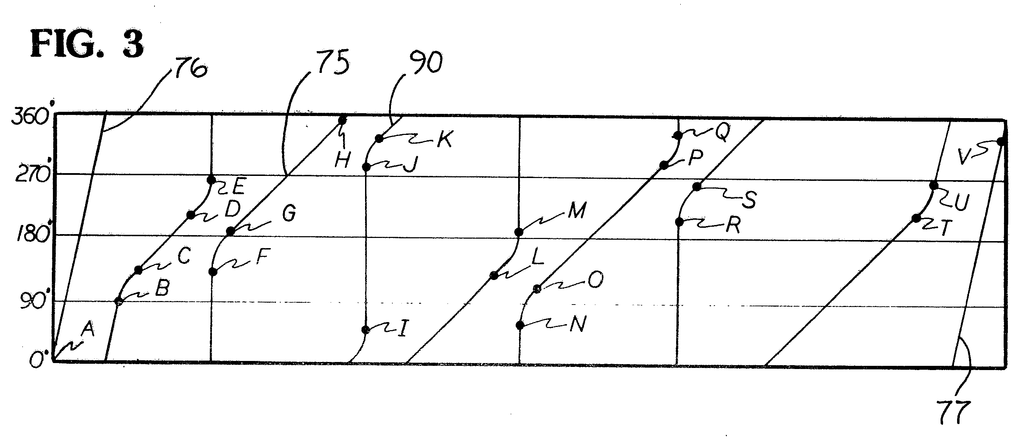

Reference should now be had to Figures 3-6 for a discussion of improved article handling apparatus for use, for example, in the inspection of round containers. Figure 3 is a cam study plan view of an improved barrel cam 50 for handling apparatus of the type shown in Figure 1. This two dimensional plot of the cam design represents the pattern of cam lobe 52 using the motion trace 90. The vertical scale shows the angular coordinate of the cam circumference, and the horizontal scale shows the position along the cam axis. Bottle carriages 30 are positioned every 360°, so that a line drawn parallel to the cam axis (horizontal in this view) would indicate the placement of a carriage 30 at each intersection of such line with the cam motion line 70.

Table 1

Segments of the Cam Design of Figure 3

| Point | Motion Ending at this Point |
|---|---|
| A | ------ |
| B | CV1 |
| C | MT1 |
| D | CV2 |
| E | MT2 |
| F | DWELL 1 |
| G | MT3 |
| H | CV2 |
| I | MT2 |
| J | DWELL 2 |
| K | MT3 |
| L | CV2 |
| M | MT2 |
| N | DWELL 3 |
| O | MT3 |
| P | CV2 |
| Q | MT2 |
| R | DWELL 4 |
| S | MT3 |
| T | CV2 |
| U | MT4 |
| V | CV1 |

The cam pattern illustrated in Figure 3 may be described in terms of a sequence of motion line segments such as 75, each having its own motion characteristic. Table 1 correlates the points A-V on motion line 90 with the type of motion (cam pitch characteristics) associated with the various motion segments 75 of the cam design of Figure 3.

The motion types indicated in the second column of Table 1 are as follows:

CV1 - Constant Velocity Pitch, 4.0 inches per revolution

CV2 - Constant Velocity Pitch, 3 inches per radian

MT1 - Modified Trapezoidal Acceleration from CV1 to CV2

MT2 - Modified Trapezoidal Deceleration from CV2 to Dwell

MT3 - Modified Trapezoidal Acceleration from Dwell to CV2

MT4 - Modified Trapezoidal Deceleration from CV2 to CV1

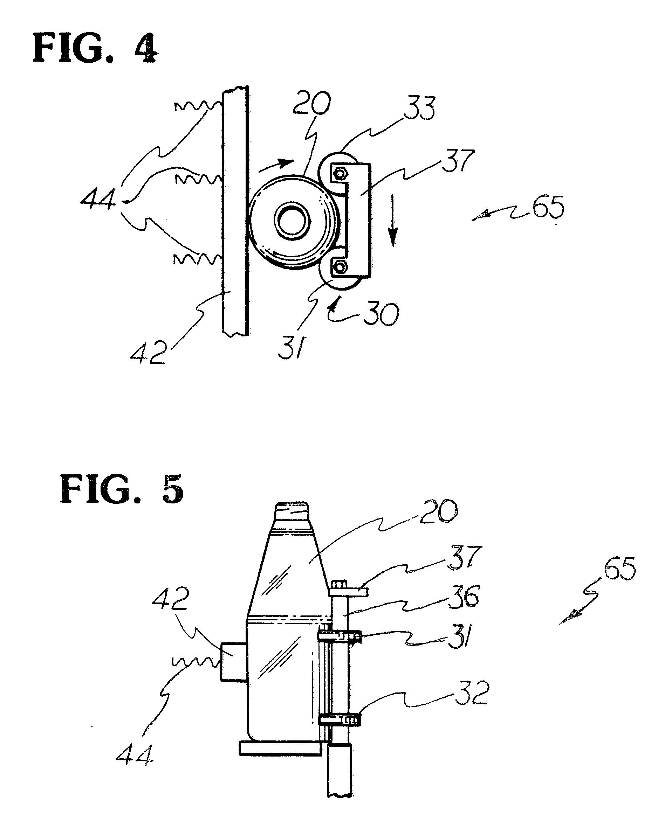

The cam segments defined between points A and R provide a series of four dwell segments (EF, IJ, MN, and QR) with intervening acceleration/constant motion/deceleration segments. These motion characteristics, which were known from the indexing approach of U.K. patent No. 1552994, enable the carriage and container to dwell at four inspection stations of the type shown at 11, 13, 15, and 17 in Figure 1. The carriage then accelerates at RS to an extended segment ST, during which the carriage is transported at constant velocity through a "translation station" as illustrated below in Figures 4-6. This extended segment ST has an axial extent (corresponding to the width of the translating station) which is no longer than the greatest possible circumference of containers to be handled by system 10 -- a feature discussed further below.

The initial and final motion segments 76 and 77 are designed to provide a smooth transfer of containers from infeed unit 40 and to outfeed unit 45.

Figures 4 and 5 illustrate a set of bottle handling elements of a translating station 65 in accordance with the invention. Container 20 is engaged at one side by bearing wheels (the upper two of which are shown at 31 and 33) of carriage 30. The side view of Figure 5 shows the mounting of two of the four bearing rollers 31 and 32 on post 36 which in turn is mounted in upper bracket 37. On the other side of container 20, a guide rail 42 (shown in part in Figure 4) is biased by springs 44 to clamp the container 20, such that as the carriage 30 moves linearly container 20 is caused to rotate in a clockwise sense through the translating station 65. By providing a width of translating station 65 (i.e., length of guide rail 42) which exceeds the circumference of container 20, this arrangement permits a complete circumferential inspection of the container by a separate device not shown. Container handling apparatus of this type could be useful in a number of inspection applications, such as aspect detection (e.g. birdswings, stones), out-of-round detection, and dimensional gauging.

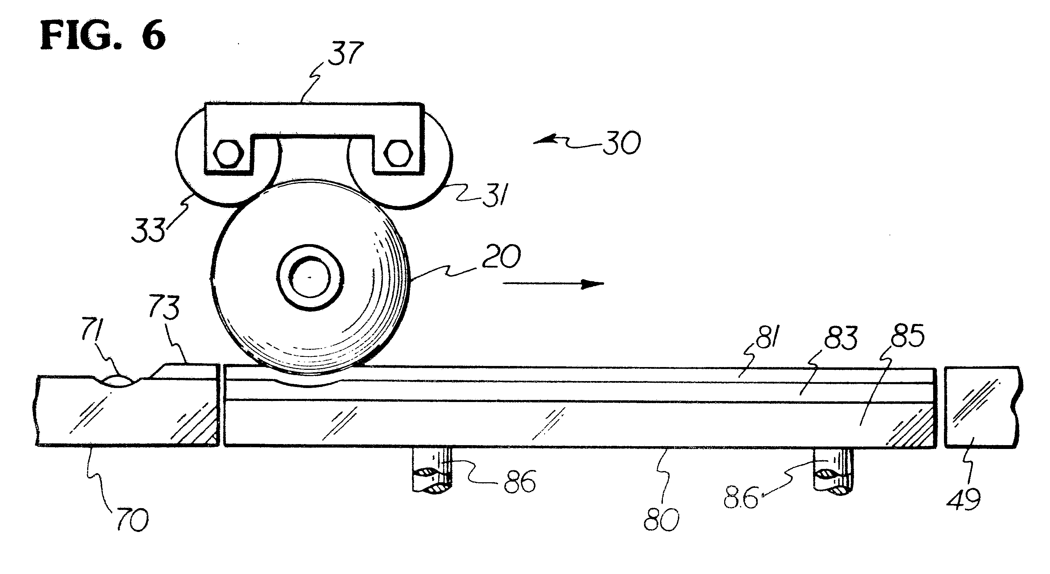

Figure 6 shows an alternative type of translating station wherein the structure for engaging the container opposite the transport carriage 30 forms part of an inspection device. A bottle 20, generally travelling from left to right and supported on one side by carriage 30, is transported along guide rail 70 one end of which is seen in Figure 6. As container 20 approaches the end of guide rail 70, it arrives at the clamping wheel 71, which is located at the fourth dwell station. Clamping wheel 71 reduces wear of the guide rail 70 due to rotation of container 20 at the fourth dwell station. As the container leaves the fourth dwell station, it presses against elastomer rotation inductor 73, which preferably is composed of polyurethane. Due to the high coefficient of friction of rotation inductor 73 and the increased pressure against the container 20, the container commences clockwise rotation. Thus, as container 20 reaches the upstream end of a sensor strip assembly 80, it is rotating, which will ensure that it rolls rather than slides against a sensing head 81 of the assembly. Sensor strip assembly 80 may comprise, for example, a part of a capacitive thinwall detection device. In an illustrative design of sensing head 81 for capacitive thinwall detection, it is comprised of a base layer of polypropylene, with a pattern of silver paint, and a surface of polyethylene wear tape. A plurality of such sensors may be provided at different vertical locations. Sensing head 81 is backed by foam strip 83 to provide a compliant strip, which is supported by bar 85 and mounting brackets 86. During the transport along sensor head 81, which is longer than the circumference of container 20, the container rolls with minimal slippage so that sensor contact with the entire circumference is ensured. This design also ensures that only one container at a time will contact the capacitive sensor. At the end of sensor assembly 80 the container is transferred to a further guide rail 49 which comprises part of the outfeed unit 45. A thinwall detection system including a sensor strip of this design is sold by American Glass Research Inc., Butler, Pennsylvania, as the AGR On-Line Thickness Selector.

## Claims

1. Apparatus for handling articles during inspection comprising an underlying support for articles travelling through an inspection area, a slidably mounted carriage for engaging an article on the support and guiding it through the inspection area, a barrel cam with its axis parallel to the path of the carriage and including a cam lobe having different pitches at different axial positions, the carriage being linked to the cam lobe so that the carriage velocity is determined by the pitch of the cam lobe, characterised in that the apparatus comprises
a translating station (65) at which the cam lobe has a non-zero pitch causing transport of the carriage (30) and article through the translating station, and
means (42, 81) for engaging the article in cooperation with the carriage at said translating station to cause the article to rotate during the transport therethrough.

2. Apparatus according to claim 1, characterised in that the barrel cam has a constant non-zero pitch at the axial segment corresponding to the translating station, to cause linear transport of the article.

3. Apparatus according to one of claims 1 and 2, characterised wherein the carriage (30) includes a plurality of bearing wheels (31, 33) for rotatably engaging the container.

4. Apparatus according to any one of claims 1 to 3, characterised in that the engaging means comprises a guide rail (42) which urges the article against the carriage so that the article rolls against the guide rail.

5. Apparatus according to any one of claims 1 to 3, characterised in that the engaging means comprises at leat one sensor strip assembly (80) which frictionally engages the container so that it rolls against the sensor strip, for inspection by means associated with said sensor strip assembly.

6. Apparatus according to claim 5, characterised in that the sensor strip assembly (80) comprises an element of a capacitive thinwall detector.

7. Apparatus according to one of claims 5 and 6, characterised in that the engaging means comprises a rotation inductor (73) upstream of the sensor strip assembly (80) which contacts the container to ensure rotation of the container as it reaches the assembly (80).

8. Apparatus according to claim 7, characterised in that the rotation inductor (73) comprises an elastomer having a high coefficient of friction.

9. Apparatus according to one of claims 1 and 2, wherein the translating station and corresponding axial portion of the barrel cam are longer than the article circumference.

10. Apparatus according to claim 1, characterised in that the cam lobe has at least one zero pitch segment to provide for the container being stationary at a dwell station.

**FIG. 1**
*Prior Art*

**FIG. 2**
*Prior Art*

EP 0 328 296 A1

**FIG. 3**

EP 0 328 296 A1

# FIG. 4

20   33   37   65   44   42   30   31

# FIG. 5

20   37   36   31   42   32   44   65

FIG. 6

## EUROPEAN SEARCH REPORT

| | DOCUMENTS CONSIDERED TO BE RELEVANT | | EP 89300981.1 |
|---|---|---|---|

| Category | Citation of document with indication, where appropriate, of relevant passages | Relevant to claim | CLASSIFICATION OF THE APPLICATION (Int. Cl 4) |
|---|---|---|---|
| D,A | GB - A - 1 552 994 (BOGATZKI) <br> * Totality * <br> ---- | 1 | B 65 G 47/28 |
| | | | TECHNICAL FIELDS SEARCHED (Int. Cl 4) |
| | | | B 65 G |

The present search report has been drawn up for all claims

| Place of search | Date of completion of the search | Examiner |
|---|---|---|
| VIENNA | 24-04-1989 | PISSENBERGER |